# EUROPEAN PATENT APPLICATION

(11) **EP 0 523 239 A1**
(43) Date of publication of application: **20.01.1993**
(21) Application number: 92901924.8
(22) Date of filing: 27.12.1991
(51) Int. Cl.: B29C 67/22

(54) **MACHINE FOR MOLDING FOAMED THERMOPLASTIC RESIN PRODUCT**

(30) Priority: 31.12.1990 JP 418854/90; 22.01.1991 JP 25956/91 U
(71) Applicant: KATAOKA, Katsumi, Osaka 560 (JP)
(72) Inventor: KATAOKA, Katsumi, Osaka 560 (JP)
(74) Representative: Strehl Schübel-Hopf Groening & Partner
(86) International application number: JP9101794
(87) International publication number: WO9211999

(57) **Abstract**

A machine for molding a foamed thermoplastic resin product, in which prefoamed beads of thermoplastic resin are filled in a cavity between a pair of metallic molds, postfoamed with the application of heat to be molded, cooled, and then taken out as a product ; in such a structure that blowing-in vents and discharging ones for heating medium are mixedly disposed on almost the whole area of each mold on the side of the cavity for saving energy consumption and raising thermal efficiency as well as productivity, and the piping for feeding the heating medium introduced into the inner chamber of the metallic mold is connected to said blowing-in vents, whereby heating and molding of prefoamed beads are enabled with said heating medium blown directly into the cavity.

## Description

### TECHNICAL FIELD

The present invention relates to a molding machine for thermoplastic resin foams wherein energy conservation is realized by improvements in the mold design.

### BACKGROUND ART

Thermoplastic resin foams are generally manufactured by heating pellets or granules each composed of a thermoplastic resin, such as polystyrene resin, and a blowing agent such as an organic liquid substance (e.g. pentane) or an organic gas substance (e.g. propane) for preliminary foaming and, after ripening, molding the same in the following manner.

As a molding hardware, a pair of juxtaposed metal mold segments is used. These mold segments have mold members which, upon mating, define a molding cavity and frame members which externally support said mold members and define a steam compartment behind each of said mold members, thus being double-walled segments.

After closure of the two mold segments with respect to each other, said prefoamed pellets are packed into said molding cavity and the steam compartments are supplied with steam to increase their internal temperature and thereby heat the mold members from behind, whereby the prefoamed pellets in the cavity are heated. Moreover, through the vent means such as slits or orifices formed in the mold members, the steam is introduced into the molding cavity defined by said mold members to thereby soften and expand (second foaming) the prefoamed pellets and give a fused body.

Thereafter, cooling water is introduced into the steam compartments to cool the whole mold. Then, the mold segments are separated from each other and the product is ejected by means of compressed air supplied to the steam compartments and ejection pins.

The metal mold used in the above molding machine is heavy in comparison with the weight of the foam product. Thus, assuming that the weight of the product is a few hundred grams, the metal mold including the frame structure weighs hundreds of kilograms. Therefore, after the specific heats of the synthetic resin and the metal mold are taken into consideration, the heat capacity of the mold amounts to hundreds to thousands times as high as that of the product foam.

In the conventional production technology, it is necessary to heat a metal mold having such a large heat capacity from ambient temperature to a molding temperature of, for example, 100 - 120°C and, after molding, cooling it for withdrawal of the product and this operation is very poor in thermal efficiency, entailing large energy consumptions.

The object of the present invention is to provide a molding machine for thermoplastic resin foams, which has an improved mold design insuring a maximum conservation of energy, increased thermal efficiency and improved productivity.

### DISCLOSURE OF THE INVENTION

The present invention relates to a molding machine for thermoplastic resin foam generally comprising a pair of juxtaposed metal mold segments each of a double-wall construction, said pair of mold segments being adapted to define a molding cavity therebetween, wherein a granular prefoamed thermoplastic resin composition charged into said molding cavity is heated for secondary foaming (blowing) and, then, cooled for withdrawal of the molding, characterized in that mold members of said mold segments which are adjoining to said molding cavity are respectively provided with heating medium inlet vents and outlet vents in alternate distributions over the substantially entire region and said inlet vents are connected to a heating medium supply pipe extending into an internal space formed in each of said mold segments to thereby introduce a heating medium directly into the molding cavity to heat and mold said prefoamed granular resin composition.

As a prefoamed granular resin composition is charged into the molding cavity defined by said pair of mold segments closed beforehand and a heating medium, such as steam, is introduced into the supply pipe extending into the internal space of each mold segment, the heating medium flows directly into the molding cavity containing the resin material from the inlet vents formed in the mold member. Thereupon, the prefoamed granular resin composition in the cavity is directly heated and, at the same time, the mold members defining the cavity are also heated. Thus, it is not that the whole metal mold is heated but only the prefoamed resin composition and the mold members in contact with it are selectively heated with high efficiency for satisfactory molding. Therefore, the consumption of heating medium, such as steam, is drastically reduced and the cooling after molding is so rapid that the thermal efficiency is also markedly increased.

Furthermore, the heating medium, such as stream, which is thus introduced into the molding cavity flows through the cavity to heat the granular resin and is withdrawn from the outlet vents. The condensed water formed on the surfaces of the mold members is also discharged from the outlet vents and not retained in the molding cavity, thus insuring satisfactory molding.

The inlet and outlet vents are preferably disposed at intervals of 20 to 100 mm in an intermingled fashion, with a ratio of 1 to 5 outlet vents to each inlet vent.

If the number of outlet vents is smaller than that of inlet vents, discharge of condensed water entrained with exhaust steam will not be sufficient, while the provision of outlet vents in more than 5 times the number of inlet vents will not insure a sufficient distribution of steam throughout the molding cavity. Similar untoward results will ensue if the interval of vents is outside the above range.

Each of said inlet vents and outlet vents can be easily constructed by plugging a through-hole, 5 to 20 mm in diameter, formed in the mold member with a vent member having an outer diameter approximating the diameter of said through-hole and having slits or orifices.

The vent member for said inlet vent may be formed with an end extending toward said internal space of a mold segment and forming a coupling for connection to a cylindrical member such as a hose. Alternatively, the end extending into said internal space may be fitted with a nipple for connection to a cylindrical member such as a hose. Moreover, as the vent member for the inlet vent, the inner surface of the metal mold segment facing said internal space is formed with an internal thread and a joint member for connection to a cylindrical member such as a hose is screwed into said thread. In any of the above arrangements, the supply pipe can be easily connected to the inlet vent through said coupling, nipple or joint member.

Regarding the supply pipe extending into the internal space of said mold segment, a manifold piece having branch pipes for connection as formed from a resilient material such as heat- and pressure-resistant rubber can be detachably connected to a main supply pipe in such a manner that free ends of said branch pipes may be connected to said inlet vents. In this manner, the piping and other assembling work in mold assembly is facilitated.

The supply pipe for connection to inlet vents may be divided into a plurality of segments and an independent main pipe be connected thereto through a valve for each segment. In this case, the heating conditions for the mold members and resin composition can be varied for the respective segments.

Furthermore, the supply pipe is preferably such that the supply of heating medium can be shut off and compressed air be then introduced. Thus, to release the product from the mold after cooling, compressed air is introduced into said supply pipe and, then, through the inlet vents into the molding cavity to assist in release of the molding from the metal mold.

### BRIEF DESCRIPTION OF THE DRAWINGS

Fig. 1 is a sectional view generally showing a molding machine for thermoplastic resin foam in accordance with the invention;
Fig. 2 is an enlarged section view showing the connection between the inlet vent and the supply pipe;
Fig. 3 is a perspective view showing an example of the vent member for the inlet vent;
Fig. 4 is a sectional view showing another example of the vent member for the inlet vent;
Fig. 5 is a sectional view showing still another example of the vent member for the inlet vent;
Fig. 6 is a partial section view showing another mode of connection between the inlet vent and the supply pipe;
Fig. 7 is a section view showing a further example of the supply pipe; and
Fig. 8 is a section view showing still another example of the supply pipe in part.

### BEST MODE FOR CARRYING OUT THE INVENTION

The molding machine of the invention for the manufacture of thermoplastic resin foams such as foamed polystyrene articles is now described in detail, with reference to the accompanying drawings.

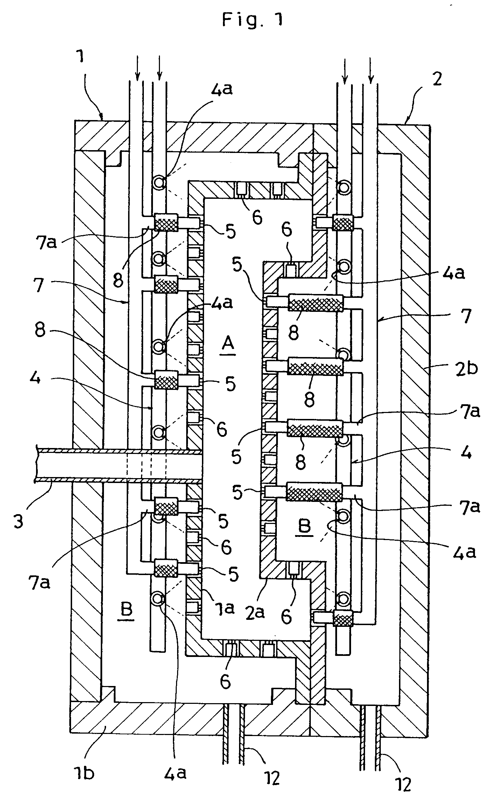

As illustrated in Fig. 1, the molding machine of the invention comprises a pair of juxtaposed metal mold segments 1, 2. These metal mold segments 1, 2 have mold members 1a and 2a adapted to define a molding cavity A on closure of said mold segments 1, 2 and external frame members 1b, 2b which support the mold segmets 1a, 2a, thus being double-walled structures defining compartments B, B, respectively.

There also is provided a charging device 3 for injecting a prefoamed granular thermoplastic resin material into said cavity A with the aid of compressed air, said charging device 3 extending through a backing plate of said frame member 1b and said mold member 1a.

Furthermore, as in the prior art, the machine includes cooling water lines 4, 4 discharging into said internal compartments B, B through said frame members 1b, 2b so that cooling water may be ejected from spray nozzles 4a, 4a disposed at ends of branch lines extending from said cooling water lines 4, 4 so as to cool the frame members 1a, 2a of the two metal mold segments 1, 2 from behind.

The mold members 1a, 2a of said two metal mold semgents 1, 2 are provided with inlet vent means 5 and outlet vent means 6 for heating medium in a substantially uniform and intermingled distribution at intervals of 20 to 100 mm as illustrated, the ratio of the number of inlet vents to that of outlet vents being 1 to 5. As described below in further detail, the inlet vent means 5 communicate with heating medium supply lines 7 in said compartments B, B of metal mold segments 1, 2 so that the heating medium steam can be directly introduced into molding cavity A for purposes of thermal molding.

The inlet vents 5 and outlet vents 6 each generally comprises a vent member 5a, 6a having an approximately same diameter as that of a through-hole which is formed in the mold member 1a or 2a, provided with slits or orifices 5', 6', 0.5 mm to 3.0 mm in diameter each, and at the side adjoining to cavity A as securely embedded in a through-hole, 5 to 20 mm in diameter.

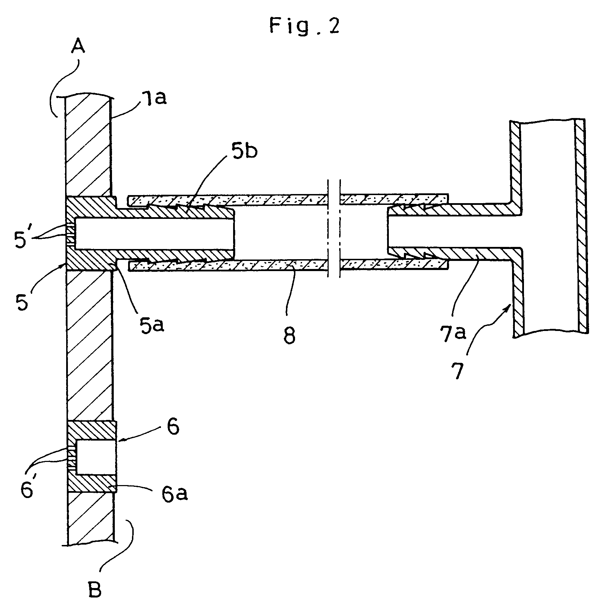

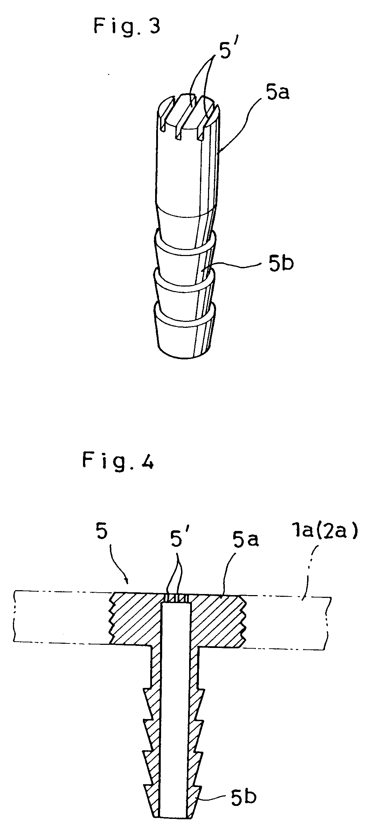

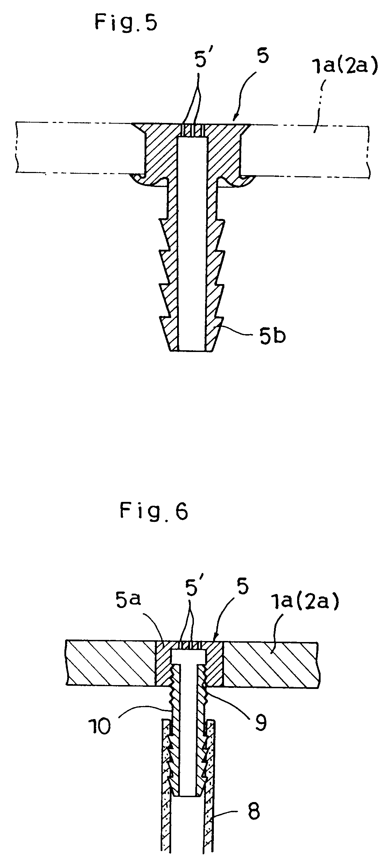

As the means of securing said vent members 5a, 6a, each member may be pressure-fitted into the through-hole of the mold member 1a or 2a as shown in Fig. 2. As an alternative, the screw-in means shown in Fig. 4 can be employed. Alternatively, the diameter of the fitting part may be increased as shown in Fig. 4 or each vent member may be fitted by cauking the skirt-like edge of its fitting portion as shown in Fig. 5. Furthermore, the fitting part may be stepped to increase resistance against slip-off.

As to the vent member 5a of said inlet vent 5, its end extending into the compartment B of metal mold segment 1 or 2 can be formed as a coupling 5b which accepts a cylindrical member 8, such as a hose or tube made of heat- and pressure-resistant rubber, synthetic resin or like material, and said coupling 5b is connected with the supply line 7 through this cylindrical member 8 which is connected with the end of the branch pipe 7a of the supply line 7 as shown on exaggerated scale in Fig. 2.

As regards the vent member 5a, its end extending into compartment B may be fitted with a nipple (not shown) for connection to said hose or the like cylindrical member 8 or, as shown in Fig. 6, the vent member may be formed with an internal thread 9 at the side adjacent to said compartment B defined by frame member 1a or 2a and a coupling member 10 for connection to said cylindrical member be screwed into said internal thread. Aside from the above arrangements, any other construction can be adopted that may enable connection to the supply line 7 through the cylindrical member 8.

Furthermore, by varying the angle of the vent member 5a on the coupling side, connection in a uniform direction according to the configuration of the mold segment 1 or 2 can be made feasible.

The sum of the sectional areas of openings in said vent members 5a of said inlet vent means 5 is preferably selected to be substantially equal to the sectional area of said supply line 7 and the internal diameter of the supply line 7 can be selected according to the number of vent members 5a. This arrangement facilitates adjustment of the amount of heating medium introduced from each inlet vent 5 and the heating conditions for the prefoamed resin and mold members 1a, 2a.

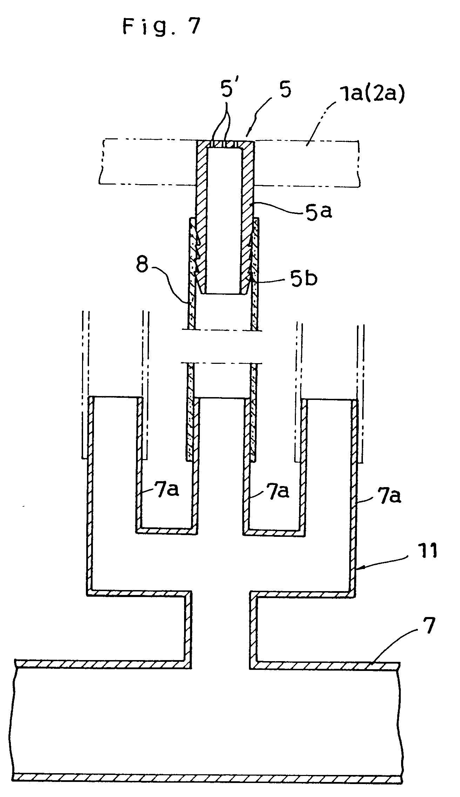

Furthermore, the supply line 7 can be provided with branch pipes 7a for connection to cylindrical members 8 as shown in Fig. 2 or be provided, either in an intermediate position or at the end of the line, with a branch manifold 11 having a plurality of branch pipes 7a as shown in Fig. 7.

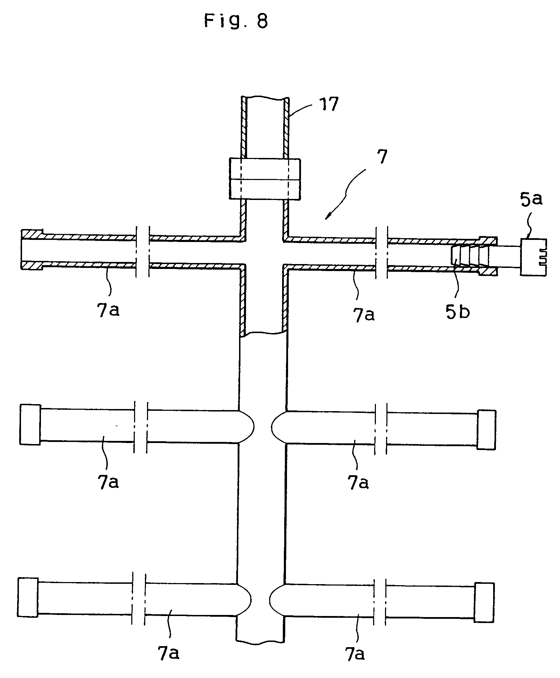

Moreover, as shown in Fig. 8, the supply line 7 having a plurality of branch pipes 7a may be integrally formed from a heat- and pressure-resistant flexible material such as rubber and detachably connected to a common supply line 17, with the end of each branch pipe 7a being directly connectable to the vent member 5a of the corresponding inlet vent 5. In this manner, the piping and assembling work on metal mold segments 1, 2 is greatly facilitated.

In either case, in order that the supply of heating medium can be shut off and the supply of compressed air be started, it is so arranged that the supply line 7 can be switched to a compressed air supply means so that compressed air may be introduced from the inlet vents 5 through the line 7.

The metal mold segments 1 and 2 are respectively provided with drain pipes 12 for withdrawal of the surplus heating medium steam, condensed water, etc.

In the molding machine described above, a prefoamed granular resin material is introduced, by compressed air, into the cavity A defined by the mated mold segments 1, 2. Then, the heating medium steam is sent through the supply line 7, whereby the steam is directly introduced from the inlet vents 5 into the cavity A.

Thereupon, the prefoamed resin in cavity A is heated and, at the same time, the mold members 1a, 2a are also heated. Thus, the prefoamed resin in cavity A and the mold members 1a, 2a can be efficiently heated without heating the entire mold segments 1, 2 including the frame members 1b, 2b defining the compartments B. As a result, the prefoamed resin is softened and swells and fuses together.

The air used for charging prefoamed resin granules into cavity A and the steam used for heating are removed from outlet vents 6 into compartments B, B and withdrawn through drain pipes 12.

Particularly, because the inlet vents 5 and outlet vents 6 are intermingly disposed, the steam introduced into cavity A flows through the cavity to heat the prefoamed resin granules and is withdrawn from the outlet vents 6. At the same time, the condensed water on the surfaces of the mold members 1a, 2a is also withdrawn from the outlet vents 6, without being retained in cavity A, thus insuring satisfactory foaming.

Then, cooling water is introduced into the cooling water pipe 4 and this water is ejected from the nozzles 4a to said compartment B thereby cool the metal mold segments 1, 2 and the foamed resin product in cavity A from behind the mold members 1a, 2a.

After cooling, the mold segments 1, 2 are opened and the foamed resin product is taken out. Thus, the supply line 7 is switched into communication with the compressed air source so that compressed air in lieu of steam is introduced through the supply line 7 and inlet vents 5. In this manner, the product can be easily taken out from the mold members 1a, 2a.

The supply pipe 7 for connection to inlet vents 5 may be divided into a plurality of segments and an independent main pipe be connected thereto via a valve for each segment. In this case, the heating conditions for the mold members 1a, 2a and resin granules can be varied for the respective segments.

### INDUSTRIAL APPLICABILITY

Thus, with the molding machine for thermoplastic resin foam in accordance with the invention, the heating medium can be directly introduced into the molding cavity containing a resin material to heat the resin material as well as the immediate mold members defining the cavity with high efficiency without heating the entire mold. Therefore, the consumption of heating medium such as steam can be drastically reduced, the post-molding cooling cycle is hastened and the thermal efficiency is markedly improved.

Furthermore, because the inlet vents and outlet vents are intermingly disposed to withdraw not only the exhaust heat medium, such as steam, but also condensed water that forms on the surfaces of the mold members, thus insuring satisfactory molding.

In addition, said inlet vents can be utilized for introduction of compressed air for release of the molding, mold release is facilitated so that the complicated release means such as ejection pins can be omitted.

Therefore, the molding machine can be applied advantageously to the molding of thermoplastic resin foams such as polystyrene foams, with a decreased energy consumption in a reduced time and with enhanced productivity.

## Claims

1. A molding machine comprising a pair of mold segments each of the double-wall construction wherein a prefoamed thermoplastic granular resin material is heated for secondary foaming in a molding cavity defined by said pair of mold segments on closure thereof and the resultant molding is cooled and released from the mold, characterized in that mold members of said mold segments which are adjacent to said molding cavity are respectively provided with inlet vents and outlet vents for a heating medium in an intermingled distribution over substantially the whole region thereof and said inlet vents are connected to a heating medium supply pipe extending into an internal space of each mold segment for direct introduction of the heating medium into the molding cavity to effect molding.

2. The thermoplastic resin foam molding machine of claim 1 wherein said inlet and outlet vents are intermingly disposed at intervals of 20 to 100 mm in a ratio of 1 - 5 outlet vents to each inlet vent.

3. The thermoplastic resin foam molding machine of claim 1 or 2 wherein each of said inlet and outlet vents comprises a through-hole having a diameter of 5 to 20 mm as formed in the mold member, and as locked in position in said through-hole a vent member having an outer diameter approximating the diameter of said through-hole and having slits or orifices.

4. The thermoplastic resin foam molding machine of Claim 3 wherein the vent member of the inlet vent has a free end extending toward the internal space of the mold segment and forming a coupling for connection to a cylindrical member such as a hose, and is connected with the supply pipe through the cylindrical member connected to said coupling.

5. The thermoplastic resin foam molding machine of Claim 3 wherein the vent member of the inlet vent has a free end extending toward said internal space and having a nipple secured thereto for connection to said cylindrical member, and is connected with the supply pipe through the cylindrical member connected to said nipple.

6. The thermoplastic resin foam molding machine of Claim 3 wherein the part of the vent member of the inlet vent adjoining to said internal space is provided with an internal thread with which engages a threaded joint for connection to a cylindrical member such as a hose, and the vent member is connected with the supply pipe through the cylindrical member connected to said joint.

7. The thermoplastic resin foam molding machine claimed in any of Claims 3 to 6 wherein the supply pipe extending into the internal space of each mold segment is a manifold piece comprising a plurality of branch pipes as fabricated from a heat- and pressure-resistant resilient material such as rubber, which manifold is detachably connected to a main pipe, with said branches being connectable to the vent members of the inlet vents, respectively.

8. The thermoplastic resin foam molding machine claimed in any of Claims 1 to 7 wherein the supply pipe connected to said inlet vents is divided into a plurality of segments and each of the segments is connected to a main pipe through a valve.

9. The thermoplastic resin foam molding machine claimed in any of Claims 1 to 8 wherein said supply pipe is such that the supply of heating medium can be shut off and the supply of compressed air be started.
